Europäisches Patentamt

European Patent Office

Office européen des brevets

(11) Publication number: **0 179 891**

**B1**

(12) **EUROPEAN PATENT SPECIFICATION**

(45) Date of publication of patent specification: **15.06.88**

(51) Int. Cl.⁴: **A 22 B 7/00**

(21) Application number: **85902694.0**

(22) Date of filing: **03.05.85**

(86) International application number:
**PCT/SE85/00193**

(87) International publication number:
**WO 85/05010 21.11.85 Gazette 85/25**

(54) **STORAGE SYSTEM FOR CARCASSES.**

(30) Priority: **04.05.84 SE 8402420**

(43) Date of publication of application:
**07.05.86 Bulletin 86/19**

(45) Publication of the grant of the patent:
**15.06.88 Bulletin 88/24**

(84) Designated Contracting States:
**BE DE FR GB IT NL**

(56) References cited:
**none**

(73) Proprietor: **ELECTROLUX CONSTRUCTOR AKTIEBOLAG**
**P.O.Box 122 Säterivägen 1-3**
**S-661 00 Säffle (SE)**

(72) Inventor: **Westergren, Rolf**
**Masungevägen 12**
**S-131 50 Saltsjö-Duvnäs (SE)**

(74) Representative: **Onn, Thorsten et al**
**AB STOCKHOLMS PATENTBYRA Box 3129**
**S-103 62 Stockholm (SE)**

Courier Press, Leamington Spa, England.

## Description

This invention relates to a storage system for carcasses according to the preamble of claim 1.

Today meat is cold stored in the form of cut up details usually packed in cardboad, or carcasses, preferably beef and pork, which are whole or divided up and then usually into two or four portions. As the units of the meat packed in cardboard are mostly standardized as far as size and weight are concerned, rational handling and storage systems are already developed in the cold-store field whereas suitable systems saving work have still not been developed for handling and cold storage of formless carcasses usually having individual weights of between 35 and 100 kg. Stock-keeping of such carcasses requires comprehensive work contribution and great storage space in relation to the weight, which involves high costs relative to cold storage of other products.

In a storage system for carcasses generally used at present carcasses arrive at the cold-stores as suspended in hooks which can be pushed or rolled and are arranged on the hauling tracks of a vehicle. The carcasses are transferred to the hauling tracks (or suspension tracks) of the cold-store and are frozen as hanging in chambers or so-called freezing tunnels intended for this for a time of 24 to 48 hours. After this the carcasses are transported as hanging to a dispatch room where they are taken down from the suspension track manually or by mechanical means and are piled on standard pallets provided with corner stays or on special pallets or racks made for the purpose. These pallet units each weighing about one ton are then transported by means of a fork truck to a cold storage where the units are piled compactly on and beside each other. As the carcasses are of different form the forms and sizes of the pallet units will also be different, and therefore great spaces are required at piling and storage. The effective storage capacity as expressed in tons/m³ will be limited. At dispatch of the products handling is carried out in the same way as at storage but in reversed order.

In another system the carcasses are transferred at a receiving terminal as hanging from a transport vehicle to a transportable rack provided with a number of short suspension tracks in the upper part where the carcasses are hanging in hooks. The entire rack with hanging carcasses and having a total weight of 1—2 tons is transported by means of a truck to freezing chambers and, after the product is frozen, further to a cold storage where the units are piled on and beside each other. The handling is rational because taking up and down from a suspension track is avoided. However, the system has high investment costs and the storage capacity is limited as the carcasses hang freely in the racks. Other disadvantages of this system are that empty racks require a big site and if the racks are placed unprotected outdoors they may be contaminated i.a. by birds so that they must be cleaned for re-utilization.

Another alternative is taking down the frozen carcasses from the suspension track and piling them loosely in boxes or so-called palletainers, which are usually made of galvanized iron and have a size of about 3 m³. The boxes are piled in the storage rooms in the same way as at pallets. This system is relatively rational but the storage capacity is very low. Moreover, the empty boxes require as great a space as the filled ones which further restricts the storage capacity when there is a storage need for other products.

When storage in freezing temperatures was first used industrially to a large extent in the 1940's frozen carcasses were stored in the cold-stores in piles, i.e. the carcasses were piled upon each other from floor to ceiling in storage rooms. The storage spaces were utilized in this way very efficiently but this handling required extremely much work and was full of risks due to the fact that frozen carcasses have a low coefficient of friction and therefore easily slide against each other. Nowadays this storage system is used to a very limited extent. It is the object of this invention to provide a storage system avoiding the disadvantages mentioned above in the prior art.

This is achieved by the characteristic features defined in the following claims.

In the storage system according to the invention the frozen carcasses are stored as hanging in displaceable hooks on movable suspension track sections which are displaceably arranged with their outer ends in a beam system in the freezing chamber of a height of several storeys. The hanging carcasses are moved directly from freezing on a suspension track connected to one of the movable suspension track sections in the freezing chamber. When a suspension track section is filled with hanging carcasses it is lifted by the aid of a fork truck to a desired storage level and is pushed in as far as possible into the beam system. The suspension track sections with the frozen carcasses are displaced successively towards each other on the relative level so that a compact stock-keeping is obtained.

In comparison with prior art systems a very rational handling is achieved with the storage system according to the present invention as the carcasses never need be taken down from the suspension track system. As is apparent from the following specification a good accessibility is further provided despite the compact storage as a consequence of the fact that the carcasses are stored in longitudinally displaceable groups on suspension track sections, which are movable transversely as well as vertically and also in relation to adjacent storage racks.

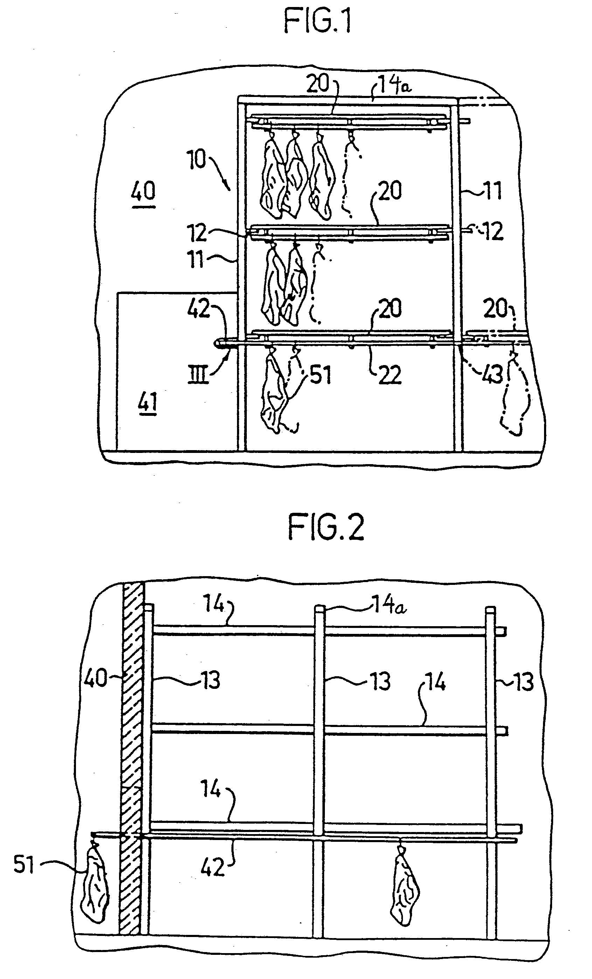

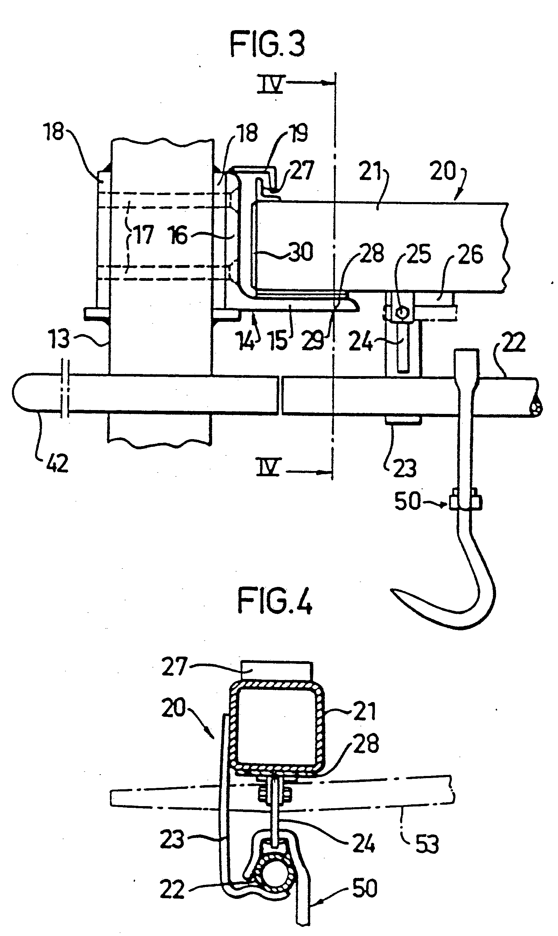

Illustrative examples of the invention are described below in greater detail with reference to the enclosed drawings, in which *Figs. 1 and 2* are a front view and a lateral view, respectively, of a part of a freezing chamber with a storage rack according to the invention, *Fig. 3* shows on a detailed greater scale the area in Fig. 1 marked by the arrow III and *Fig. 4* is a cross sectional view taken along the line IV—IV of the storage member in Fig. 3.

2

In Figs. 1 and 2 there is shown a storage rack according to the invention generally designated 10 and housed in a freezing chamber in proximity to a door 41 in one of the outer walls 40 of the freezing chamber.

The storage rack 10 (Fig. 1) comprises substantially a pair of vertical and parallel walls 11 arranged in a definite spaced relationship to each other between which storage members 20 can be hung on several levels, which members are horizontally displaceable on support ledges 12 projecting from the walls 11.

In the example shown each wall 1 consists of an open frame construction (Fig. 2) having a plurality of vertical beams 13 and horizontal beams 14 connecting these. The vertical beams 13 are of box type and their lower ends are anchored in a suitable manner to the floor of the freezing chamber while their upper ends are shown connected via transversal beams 14a with the corresponding upper ends of the vertical beams 13 of the opposite wall.

As is apparent from Fig. 3 the horizontal beams 14 are L-beams, the flanges 15 of which form the above-mentioned support ledges of the storage members 20. The other flange 16 of each L-beam 14 is connected with associated vertical beams by means of reinforcing plates 18 welded to these and screw joints 17. Each storage member 20 is according to Figs. 3 and 4 built of an upper support beam 21 of rectangular cross section, both lower end sections of which are intended to be placed slidingly on the support ledges 12, 15 of the storage rack, and a lower suspension track section in the form a pipe piece 22 for suspension of roller or slaughter hooks 50 of known type for the carcasses 51 to be cold stored. The pipe piece 22 is attached in spaced relationship to the support beam 21 at one side thereof by means of a plurality of flat bars 23 in such a way that the roller hooks 50 can run without hindrance along the whole pipe piece 22. Said distance is enough great in order that fork legs 53 (Fig. 4) of a fork truck not shown might be introduced unimpededly between the support beam 21 and the pipe piece 22 at lifting and displacement of the storage members 20 on the support ledges of the storage rack.

Between the support beam 21 and the suspension track section or the pipe piece 22 there is a locking flap 24 at each end section of each storage member 20, said flap preventing the roller hooks 50 already hung from sliding off the suspension track section 22 but permitting roller hooks to be introduced from the end of the suspension track section. The locking flap 24 (only one is shown) is pivotably attached at 25 to the support beam 20 and its upper end bears in the locking position against a stop means 26 also attached to the underside of the support beam 20. The locking flap 24 can also be formed to be occasionally retained in the open position drawn with dash-dotted lines at discharge of the storage member 20, e.g. in that the stop means 26 is made as drawing magnet.

In order to avoid that the storage members 20 are tilted in handling to such an extent that they fall down from the support ledges 15, upwardly directed transverse flanges 27 are arranged at their upper end sections, which flanges are enclosed from above by a groove, which in the example shown is defined by an angle iron 19 running along the upper side of each horizontal beam 14. As is further apparent from Figs. 3 and 4 the undersides of the support beams 21 and the upper sides of the support ledges 15 are coated in the common contact area with sliding plates 28 and bands 29, respectively, of a low friction material, e.g. a suitable plastic or stainless steel, respectively. Moreover, the ends of the support beams 21 are preferably sealed by plastic covers 30.

In order that the carcasses might be easily transferred, without being lifted and reloaded, as hanging in roller hooks 50 to and from the storage members 20 from and to the outside of the freezing chamber a suspension track 42 is arranged on a level with the lowermost supporting plane of the storage rack, which track 42 extends from outside in suitable manner through the door 41 into the freezing chamber and along the outside of the storage rack to the open front side thereof, where it is terminated in a bend of 90° (Fig. 3). In this area the lowermost pair of horizontal support beams 14 of the storage rack projects a distance further ahead than the other horizontal beams 14 so that the one ends of the suspension track sections 22 of the storage members 20 can be oriented on a line with and against the end of the suspension track for transfer of the roller hooks 50 of the hanging carcasses 51.

As indicated with dash-dotted lines in Fig. 1 the storage rack can also be laterally multiplied, an empty storage member 20 in the position according to Fig. 3 serving as transferring member of the roller hooks to the following storage rack. The right wall 11 in Fig. 1 is then provided in suitable manner with a short piece 43 of a suspension track bridging the distance to the following storage rack.

For storage of the members 20 occasionally not being used a further supporting plane can be arranged on the storage racks above the uppermost storage plane (not shown) so that the storage members do not encroach upon the storage space. As the empty storage members in this way need not be taken out of the freezing chamber good hygiene is achieved as well as a considerable limitation of corrosion. Moreover, by such a compact storage of the empty storage members 20 the space between the walls of the storage racks can be made free for alternative storage of e.g. pallet articles.

In addition to the embodiment of a storage system described above according to the invention a lot of modifications are possible for one skilled in the art within the scope of the following claims. A chain-driven carrier arrangement which moves automatically the roller hooks 50 with carcasses along the suspension track 42 as well as the storage members 20 along the support beams 14 can be arranged. It is also possible to have the vertical movement of the storage members 20 be carried out by lift means instead of the fork truck indicated above.

## Claims

1. Storage system in a freezing chamber for carcasses, characterized by at least one storage rack (10) arranged in the freezing chamber, the storage rack comprising a pair of spaced apart walls (11), from the facing sides of which horizontal support ledges (12, 15) project on different storage levels, a plurality of elongate storage members (20), the end sections of which are intended to be placed removably on the support ledges (12, 15) on a desired storage level and which each have a suspension track section (22), and at least one suspension track (42) extending from the outside and into the freezing chamber, said suspension track terminating at the storage rack (10) at a position where the suspension track section (22) of each storage member (20) may be placed, for displaceable transfer of hanging carcasses (51) from the suspension track (42) to the storage rack (10) and contrariwise.

2. Storage system as claimed in claim 1, characterized in that each storage member (20) comprises a supporting beam (21) to be placed on the support ledges (12, 15) and that the suspension track section comprises a pipe piece (22) attached in spaced relationship to the underside of the supporting beam (21).

3. Storage system as claimed in any one of the foregoing claims, characterized in that a releasable lock (24, 25, 26) is arranged at both ends of each storage member (20), which permits suspension means (50) for the carcasses to be entered on the suspension track section (22) from the ends thereof, but which normally prevents the suspension means (50) from sliding off the ends of the suspension track section (22).

4. Storage system as claimed in claim 2 or 3, characterized in that the undersides of the supporting beams (21) and/or the upper sides of the support ledges are covered by a material (28, 29) of low friction at their common contact surfaces.

5. Storage system as claimed in any one of the foregoing claims, characterized in that each wall (11) is formed as a beam construction with vertical and horizontal beams (13, 14), the horizontal beams (14) being L-beams, the one flanges (16) of which are connected with the vertical beams (13) and the other flanges (15) of which form the support ledges.

6. Storage system as claimed in any one of the foregoing claims, characterized in that a downwardly open groove (19) running along the support ledge is defined at a distance above each support ledge (12, 15), in which groove an upwardly directed flange (27) formed at each end of the upper side of each storage member (20) is guided with a play.

7. Storage system as claimed in any one of the foregoing claims, characterized in that the suspension track (42) in the freezing chamber extends along the outside of one wall (11) of the storage rack (10), is horizontally deflected 90° at the end thereof and terminated in the area beneath a support ledge.

8. Storage system as claimed in any one of the foregoing claims, characterized in that the storage rack (10) forms one of a plurality of laterally combined storage racks with common walls (11).

9. Storage system as claimed in claim 8, characterized in that a suspension track section (43) is arranged at each common wall (11) for transfer of the hanging carcasses between adjacent storage racks (10).

## Patentansprüche

1. Lagerungssystem bei einem Gefrierraum für Schlachtkörper, gekennzeichnet durch mindestens ein im Gefrierraume angeordnetes Lagerungsgestell (10), das ein Paar mit Zwischenraum angeordnete Wände (11) umfasst, von deren gegenüberliegenden Seiten horizontale Tragrippen (12, 15) an verschiedenen Lagerungsniveaus vorspringen, eine Vielfalt langgestreckte Lagerungselemente (20), deren Endsektionen auf die Tragrippen (12, 15) auf einem gewünschten Lagerungsniveau abnehmbar placiert werden sollen und die je eine Hängebahnsektion (22) und mindestens eine Hängebahn (42) haben, die sich von aussen in den Gefrierraum erstrecken, wobei die Hängebahn am Lagerungsgestell (10) in einer Lage endet, wo die Hängebahnsektion (22) jedes Lagerungselements (20) placiert werden kann, um hängende Schlachtkörper (51) von der Hängebahn (42) zum Lagerungsgestell (10) und umgekehrt versetzbar zu überführen.

2. Lagerungssystem nach Anspruch 1, dadurch gekennzeichnet, dass jedes Lagerungselement (20) einen Tragbalken (21) umfasst, der auf die Tragrippen (12, 15) gelegt werden soll, und dass die Hängebahnsektion ein an der Unterseite des Tragbalkens (21) mit Zwischenraum befestigtes Rohrstück (22) umfasst.

3. Lagerungssystem nach einem der vorstehenden Ansprüche, dadurch gekennzeichnet, dass eine auslösbare Sperre (24, 25, 26) an beiden Enden jedes Lagerungselements (20) angeordnet ist, die es zulässt, dass Aufhängemittel (50) für die Schlachtkörper auf die Hängebahnsektion (22) von deren Enden eingeführt werden, aber die normal verhindert, dass die Aufhängemittel (50) von den Enden der Hängebahnsektion (22) abrutschen.

4. Lagerungssystem nach Anspruch 2 oder 3, dadurch gekennzeichnet, dass die Unterseiten der Tragbalken (21) und/oder die Oberseiten der Tragrippen mit einem Material von niedriger Reibung bei ihren gemeinsamen Kontaktflächen gedeckt sind.

5. Lagerungssystem nach einem der vorstehenden Ansprüche, dadurch gekennzeichnet, dass jede Wand (11) als eine Balkenkonstruktion mit vertikalen und horizontalen Balken (13, 14) ausgebildet ist, wobei die horizontalen Balken (14) L-Balken sind, deren eine Flansche (16) mit den vertikalen Balken (13) verbunden sind und deren andere Flansche (15) die Tragrippen bilden.

6. Lagerungssystem nach einem der vorstehenden Ansprüche, dadurch gekennzeichnet, dass eine nach unten offene Nut (19), die längs der Tragrippe läuft, in einer Entfernung oberhalb jeder Tragrippe (12, 15) abgegrenzt wird, in welcher Nut ein bei jedem Ende der Oberseite jedes Lagerungselements (20) ausgebildeter, nach oben gerichteter Flansch (27) mit Spiel geführt wird.

7. Lagerungssystem nach einem der vorstehenden Ansprüche, dadurch gekennzeichnet, dass die Hängebahn (42) im Gefrierraume sich längs der Aussenseite der einen Wand (11) des Lagerungsgestells (10) erstreckt, am Ende dieser horizontal 90° abgelenkt und im Bereiche unter einer Tragrippe abgeschlossen ist.

8. Lagerungssystem nach einem der vorstehenden Ansprüche, dadurch gekennzeichnet, dass das Lagerungsgestell (10) eines von einer Vielfalt seitlich kombinierter Lagerungsgestelle mit gemeinsamen Wänden (11) bildet.

9. Lagerungssystem nach Anspruch 8, dadurch gekennzeichnet, dass an jeder gemeinsamen Wand (11) eine Hängebahnsektion (43) zur Ueberführung der hängenden Schlachtkörper zwischen angrenzenden Lagerungsgestellen (10) angeordnet ist.

## Revendications

1. Système de stockage de carcasses dans un local frigorifique, caractérisé par au moins un râtelier de stockage (10) disposé dans le local frigorifique et comprenant une paire de parois espacées (11) dont les faces orientées en vis-à-vis présentent, à des niveaux de stockage différents, des barres horizontales d'appui (12, 15) faisant saillie vers l'intérieur; un nombre d'éléments de stockage allongés (20) dont les parties extrêmes sont prévues pour être posées déplaçables sur les barres d'appui (12, 15) au niveau de stockage souhaité et qui comportent chacun un tronçon de voie suspendue (22); et au moins une voie suspendue (42) passant de l'extérieur dans le local frigorifique et se terminant au râtelier de stockage (10) en voisinage immédiat d'une position susceptible d'être occupée par le tronçon de voie suspendue (22) de chacun des éléments (20) de stockage, en vue du transfert coulissant de carcasses suspendues (51) de la voie suspendue (42) vers le râtelier de stockage (10) et vice versa.

2. Système de stockage selon la revendication 1, caractérisé en ce que chacun des éléments de stockage (20) comprend une poutre d'appui (21) à poser sur les barres d'appui (12, 15) et en ce que le tronçon de voie suspendue comprend une pièce tubulaire (22) reliée avec un certain écartement à la face inférieure de la poutre d'appui (21).

3. Système de stockage selon l'une des revendications précédentes, caractérisé en ce qu'il est prévu, à chacune des extrémités de chacun des éléments de stockage (20), un arrêtoir déblocable (24, 25, 26) permettant à des organes (50) de suspension des carcasses d'entrer sur le tronçon de voie suspendue (22) par ses extrémités mais empêchant normalement les organes (50) de suspension de quitter le tronçon de voie suspendue (22).

4. Système de stockage selon l'une des revendications 2 et 3, caractérisé en ce que les faces inférieures des poutres d'appui (21) et/ou les faces supérieures des barres d'appui sont revêtues, à leurs surfaces de contact mutuel, d'une matière (28, 29) à faible frottement.

5. Système de stockage selon une quelconque des revendications précédentes, caractérisé en ce que chaque paroi (11) est constituée par une structure à poutres verticales et horizontales (13, 14), les poutres horizontales (14) étant des poutres en L dont les unes (16) des ailes sont reliées aux poutres verticales (13), leurs autres ailes (15) formant les barres d'appui.

6. Système de stockage selon une quelconque des revendications précédentes, caractérisé en ce que, à une certaine distance au-dessus de chaque barre d'appui (12, 15), on a délimité, le long de celle-ci, une rainure (19) ouverte vers le bas pour guider, avec un certain jeu, une ailette (27) orientée vers le haut et disposée à chacune des extrémités de la face supérieure de chacun des éléments de stockage (20).

7. Système de stockage selon une quelconque des revendications précédentes, caractérisé en ce que la voie suspendue (42) du local frigorifique s'étend le long de l'extérieur d'une paroi (11) du râtelier de stockage (10), qu'elle change de direction de 90° dans le plan horizontal à l'extrémité de celle-ci et qu'elle se termine dans la zone située au-dessous d'une barre d'appui.

8. Système de stockage selon une quelconque des revendications précédentes, caractérisé en ce que le râtelier de stockage (10) constitue un parmi plusieurs râteliers de stockage combinés latéralement et présentant des parois (11) communes.

9. Système de stockage selon la revendication 8, caractérisé en ce qu'il est prévu, à chaque paroi commune (11), un tronçon de voie suspendue (43) permettant le transfert des carcasses suspendues entre des râteliers de stockage (10) voisins.

# FIG.1

# FIG.2

0 179 891

FIG.3

FIG.4

2